(19) Europäisches Patentamt
European Patent Office
Office européen des brevets

(11) **EP 1 687 756 B1**

(12) **EUROPÄISCHE PATENTSCHRIFT**

(45) Veröffentlichungstag und Bekanntmachung des Hinweises auf die Patenterteilung:
**29.12.2010   Patentblatt 2010/52**

(21) Anmeldenummer: **04789912.5**

(22) Anmeldetag: **01.10.2004**

(51) Int Cl.:
***G06K 9/62*** ^(2006.01)

(86) Internationale Anmeldenummer:
**PCT/DE2004/002196**

(87) Internationale Veröffentlichungsnummer:
**WO 2005/041115 (06.05.2005 Gazette 2005/18)**

(54) **VERFAHREN ZUR KLASSIFIKATION VON MESSWERTEN IN DER MEDIZINISCHEN UND BIOCHEMISCHEN ANALYTIK**

METHOD FOR CLASSIFYING MEASURED VALUES IN MEDICAL AND BIOCHEMICAL ANALYSIS

PROCEDE POUR CLASSIFIER DES VALEURS DE MESURES DANS DES ANALYSES MEDICALES ET BIOCHIMIQUES

(84) Benannte Vertragsstaaten:
**AT BE BG CH CY CZ DE DK EE ES FI FR GB GR HU IE IT LI LU MC NL PL PT RO SE SI SK TR**

(30) Priorität: **06.10.2003   DE 10346757**

(43) Veröffentlichungstag der Anmeldung:
**09.08.2006   Patentblatt 2006/32**

(73) Patentinhaber: **Löser Medizintechnik GmbH**
**04275 Leipzig (DE)**

(72) Erfinder: **BITTERLICH, Norman**
**09114 Chemnitz (DE)**

(74) Vertreter: **Carlsohn, Alexander**
**Patentanwälte**
**Riechelmann & Carlsohn**
**Wiener Strasse 91**
**01219 Dresden (DE)**

(56) Entgegenhaltungen:
**WO-A-01/24699     US-A- 6 137 909**

• **WALLACE J C ET AL: "CLASSIFICATION OF 1H MR SPECTRA OF BIOPSIES FROM UNTREATED AND RECURRENT OVARIAN CANCER USING LINEAR DISCRIMINANT ANALYSIS" MAGNETIC RESONANCE IN MEDICINE, ACADEMIC PRESS, DULUTH, MN, US, Bd. 38, 1997, Seiten 569-576, XP000955430 ISSN: 0740-3194**
• **PUDIL P ET AL: "Feature selection toolbox software package" PATTERN RECOGNITION LETTERS, NORTH-HOLLAND PUBL. AMSTERDAM, NL, Bd. 23, Nr. 4, Februar 2002 (2002-02), Seiten 487-492, XP004335349 ISSN: 0167-8655**

**Beschreibung**

Die Erfindung betrifft ein Verfahren zur Klassifikation von Meßwerten in der medizinischen und biochemischen Analytik. Sie betrifft insbesondere ein Verfahren zur Diagnose von Erkrankungen anhand von Meßwerten.

Dank der Entwicklung neuer und der Weiterentwicklung bestehender Verfahren zum Erkennen von Krankheiten, beispielsweise Untersuchungen des Immunsystems eines Patienten auf Antikörper und andere Proteine, die mit einer bestimmten Krankheiten verbunden sind oder verbunden sein können, stehen einem Arzt heute eine Vielzahl von Informationen, in der Regel in Form von Meßwerten, zur Verfügung. Anhand dieser Meßwerte, die die sogenannte Primärinformation darstellen, versucht der Arzt dann festzustellen, ob der Patient tatsächlich an einer bestimmten Krankheit leidet oder nicht. Der Arzt steht also vor der Aufgabe, die Vielzahl von Meßwerten so auswerten, daß er zweifelsfrei entscheiden kann, ob der Patient gesund oder krank ist. Dies erfordert eine Klassifikation der vorhandenen Meßwerte. Aufgrund der Vielzahl von Meßwerten, von denen häufig einige für das Vorliegen einer Erkrankung, andere jedoch dagegen sprechen, ist es jedoch nicht möglich, durch bloße Betrachtung der Meßwerte eine Erkrankung zu diagnostizieren.

Unter Klassifikation versteht man systemtheoretisch die Ordnung, Strukturierung und Komprimierung von Aussagen und Daten. Die zu klassifizierenden Ausschnitte der objektiven Realität werden modellhaft durch Objekte wiedergegeben, die durch einen wohl definierten Satz von Informationen charakterisiert sind. Eine Klasse umfaßt solche Objekte, die eine Einheitlichkeit aufweisen. Zur Beschreibung dieser Einheitlichkeit sind Kriterien vorzugeben, die nach inhaltlichen (semantische Klassen) oder formalen (natürliche Klassen) Aspekten die Ähnlichkeit anzeigen.

Bei der Bildung von natürlichen Klassen können die Informationen zur Klassenzuordnung in direkter Weise aus der Objektbeschreibung abgeleitet werden. Dagegen erfordert die Bildung von semantischen Klassen einen "Lehrer", mit dessen Hilfe die Klassenzuordnung definiert wird. Für eine korrekte Klassenzuordnung können andere als die die Objekte beschreibende Informationen notwendig sein. Sind derartige Informationen im Einsatzfall nicht verfügbar, weil beispielsweise die sichere Ermittlung einer Krankheit einen operativen Eingriff verlangt, so ist die semantische Klassifikationsaufgabe durch formale Kriterien zu lösen. Dafür werden aus den Informationen Merkmale abgeleitet, also solche charakteristische Eigenschaften eines Objektes, die die Semantik spezifizieren. Die Entwicklung leistungsfähiger Algorithmen wird anhand einer Lern- (oder Referenz-) Datenmenge praktiziert. Hierbei sind für repräsentativ ausgewählte Objekte die Klassenzuordnung bekannt und der Klassifikationsalgorithmus wird hinsichtlich deren Reklassifikation optimiert.

Die Klassifikation besteht bei seiner ganzheitlichen Betrachtung aus den Arbeitsschritten

- Meßdatenaufbereitung (Primärinformationen)
- Merkmalsbildung (Merkmalsvektor)
- Klassifikation (Sympathievektor)
- Ergebnisbewertung (Entscheidungssicherheit)

Diese Arbeitsschritte sind nicht nur in ihrer zeitlichen Abfolge gegliedert, sondern werden meist auch von unterschiedlichen Positionen aus bearbeitet. In der technischen Diagnostik erscheint diese Arbeitsteilung besonders deutlich:

- der Meßtechniker erstellt mit seinem Instrumentarium die Primärinformationen,
- der Analytiker ermittelt aus diesen Werten auf der Basis von Modellansätzen geeignet erscheinende Merkmale,
- der Informatiker entwickelt daraus Algorithmen zur Klassifikation und
- der Anwender schließlich bewertet die Leistungsfähigkeit des gesamten Systems an praktisch orientierten Gütekriterien.

Auch wenn jeder Fachmann auf seinem Gebiet die Leistungspotentiale der Verfahren ausschöpft, ist damit eine optimale Klassifikationsleistung des Gesamtsystems nicht gesichert.

Eine besondere Schwierigkeit besteht im heutigen Stand der Technik bei der Lösung von Klassifikationsaufgaben in der Genomic/Proteomic. Aufgrund des zahlenmäßigen Verhältnisses von Primärinformationen (mehrere Tausend) und Objekten (lediglich wenige, unter 1000) stoßen klassische statistische Verfahren an ihre Grenzen, da Aussagen nicht wie bisher üblich mit der statistischen Sicherheit abgeleitet werden können. Zudem sind keine allgemeinen Verfahren bekannt, effiziente Merkmale zu generieren. Da aufgrund der derzeit fehlenden Systemkenntnisse Zusammenhänge zwischen Primärinformationen und Klassenzugehörigkeit weitgehend unbekannt sind, bleiben auch wissensbasierte Entwicklungsstrategien unbefriedigend.

Um in dieser Hinsicht Verbesserungen zu erreichen, ist es daher erforderlich, daß nicht nur die Klassifikationsaufgabe gelöst wird, sondern daß die wesentlichen Merkmale ermittelt werden, um einerseits dem Anwender über die Zusammenhänge von Primärinformation und Klassenzuordnung detailliert zu informieren und andererseits den Meß- und Berechnungsaufwand zu minimieren.

Es ist daher ein Verfahren vorgeschlagen worden, daß folgende Schritte umfaßt:

- In einem ersten Schritt in der Ebene der Primärinformation werden formale Klassen gesucht. Hier fließen das gesicherte Wissen und die praktischen Erfahrungen aus den Meßprinzipien und den grundlegenden biochemischen Zusammenhängen ein. Im Ergebnis dieser Untersuchungen werden über eine drastische Datenreduktion Merkmale bereitgestellt.

- Im zweiten Schritt werden diese Merkmale hinsichtlich ihrer Eignung zur Beschreibung der semantischen Klassen analysiert. Neben klassischen statistischen Verfahren finden dabei moderne Verfahren zur Klassifikatorentwicklung wie Neuronale Netze oder evolutionäre Algorithmen breite Anwendung.

Die Arbeitsteilung zwischen den Technikern auf der einen Seite und den Informatikern auf der anderen Seite bleibt dabei bestehen. Die in der wissenschaftlichen Öffentlichkeit häufig diskutierten widersprüchlichen Untersuchungsergebnisse belegen, daß diese Vorgehensweise zwar die Klassifikationsaufgabe für eine konkrete Datenmenge lösen kann, zur Modellbildung aber nur wenig beiträgt. Die Auswahl der "informativen Merkmale" bleibt als black-box der Diskussion verborgen. Insbesondere werden dadurch die interaktiven Möglichkeiten nicht genutzt, Forschungsergebnisse über den Zusammenhang von Primärinformationen und Klassenzuordnung in beide Teile der Klassifikatorentwicklung gleichermaßen adäquat einzubinden.

Wallace J C et al. "Classification of 1H MR Spectra of Biopsies from Untreated and Recurrent Ovarian Cancer Using Linear Discriminant Analysis" Magnetic Resonance in Medicine, Academic Press, Duluth, MN, US, Bd. 38, 1997, Seiten 569-576, offenbart ein Klassifikationsverfahren, bei dem ein Referenzsystem unter Verwendung von Referenzmeßwerten von Referenzobjekten mit bekannter Klassenzugehörigkeit erzeugt wird. Dabei werden Referenzmerkmale gebildet, die ein hohes Klassifikationspotential aufweisen. Anhand der Merkmale des Referenzsystems wird eine Klassifizierung von Messwerten durchgeführt. Die Klassifikationspotentiale der Referenzmerkmale werden weder quantifiziert, noch werden de Referenzmerkmale in der Reihenfolge ihres Klassifikationspotentials geordnet.

Pudil P et al. "Feature Selection Toolbox Software Package" Pattern Reco-Guition Letters, North-Holland Publ. Amsterdam, NL, Bd. 23, Nr. 4, Februar 2002 (2002-02), Seiten 487-492, beschreibt Verfahren zur Klassifikation von Merkmalen, bei denen Merkmale ausgewählt werden, die den größten Werten einer Bewertungsfunktion entsprechen.

Aufgabe der Erfindung ist es, die Nachteile nach dem Stand der Technik zu beseitigen. Es soll insbesondere ein Verfahren zur Klassifikation von Meßwerten in der medizinischen und biochemischen Analytik angegeben werden, das es mit vergleichsweise geringem Aufwand ermöglicht, einerseits Meßwerte zu klassifizieren und anderseits den Anwender über den Zusammenhang zwischen Meßwerten und Klassifikation detailliert zu informierten.

Diese Aufgabe wird durch die Merkmale des Auspruchs 1 gelöst. Zweckmäßige Ausgestaltungen der Erfindungen ergeben sich aus den Merkmalen der Ansprüche 2 bis 6.

Nach Maßgabe der Erfindung ist ein Verfahren zur Klassifikation von Meßwerten in der medizinischen und biochemischen Analytik vorgesehen, umfassend

- Erzeugen eines Referenzsystems unter Verwendung von Referenzmeßwerten von Referenzobjekten, von dene die Klassenzu ordnung bekannt ist,
 wobei die Referenzmeßwerte eine fortlaufende Achseneinteilung aufweisen, umfassend

  - die Bildung von Referenzmerkmalen, die ein hohes Klassifikationspotential aufweisen, auf Basis der Referenzmeßwerte aller Referenzobjekte durch Zusammenfassen von benachbarten Referenzmesswerten mit hohem Klassifikationspotential, und

  - Quantifizierung des Klassifikationspotentials der Referenzmerkmale und Ordnen der Referenzmerkmale in der Reihenfolge ihres Klassifikationspotentials, beginnend mit dem Referenzmerkmal mit dem höchsten Klassifikationspotential;

- Klassifikation der Meßwerte unter Verwendung der Referenzmerkmale des Referenzsystems.

Vorzugsweise umfasst das erfindungsgemäße Verfahren das

- Erzeugen eines Referenzsystems unter Verwendung Referenzmeßwerten von Referenzobjekten, von denen bekannt ist, ob eine Erkrankung vorliegt ("Krank-Klasse") oder nicht ("Gesund-Klasse"), umfassend die Schritte

  (a) Bestimmen des Klassifikationspotentials der Referenzmeßwerte aller Referenzobjekte;

(b) Bilden von Referenzmerkmalen

(c) Ordnen der Referenz merkmale in der Reihenfolge ihres Klassifikationspotentials;

(d) Ermittelung von Zugehörigkeitswerten für jedes Referenzobjekt für die Zugehörigkeit zur "Gesund-Klasse" oder zur "Krank-Klasse", beginnend mit dem Referenzmerkmal mit dem höchsten Klassifikationspotential;

(e) Bestimmen der Güte der Klassifikation durch Reklassifikation der Referenzobjekte und

(f) Wiederholung der Schritte (d) und (e), indem in Schritt (d) das nächst folgende Referenzmerkmal gemäß der in Schritt (c) angegebenen Reihenfolge einbezogen wird, solange sich die Güte der Klassifikation gemäß Schritte (e) verbessert;

- Klassifizierung eines umbekannken Objekts unter Verwendung des Referenzsystems, umfassend die Schritte

(g) Bilden von Merkmalen, indem die Meßwerte des Objekts wie in Schritt (b) zusammengeführt werden, wobei die Anzahl und Auswahl der Merkmale der Anzahl und Auswahl der gemäß Schritt (f) gebildeten Referenzmerkmale entspricht;

(h) Ermittelung von Zugehörigkeitswerte für diese Merkmale und

(i) Feststellen, ob die in Schritt (h) ermittelten Zugehörigkeitswerte die Zugehörigkeit zur "Krank-Klasse" belegen.

Vorzugsweise umfaßt Schritt (i) die Bestimmung der Entscheidungssicherheit.

Der Begriff "Referenzobjekt" bezieht sich in diesem Zusammenhang auf die Gesamtheit der für einen bestimmten Patienten zur Verfügung stehenden Meßwerte. Die Meßwerte eines einzelnen Patienten wurden zu einem Referenzobjekt zusammengefaßt.

Der Begriff "Meßwerte" soll jede Information umfassen, die Bestandteil einer Primärinformation sein könnte. Der Begriff "Meßwert" bezieht sich insbesondere auf alle im medizinischen Bereich anfallenden Zahlenwerte, insbesondere Zahlenwerte für Indikatorstoffe.

Der Begriff "Indikatorstoff" bezieht sich hierin auf Verbindungen oder Elemente, die - je nach ihrer Art - in biologischen Systemen produziert werden oder in biologischen Systeme eingebracht werden und deren Vorhandensein oder deren Konzentration (z. B. in einem bestimmten Organ) ein Charakteristikum für einen biologischen Prozeß oder einen biologischen Zustand ist. Derartige Verbindungen und Elemente umfassen beispielsweise solche, die von Tumorzellen produziert, durch einen Tumor in anderen Körperzellen induziert und/oder als tumorspezifische Stoffe in ihrer Konzentration durch einen Tumor verändert werden. Derartige Indikatorstoffe sind beispielsweise Makromoleküle, z. B. Proteine, oder Spurenelemente.

Der Begriff "Diagnose" bezieht sich hierin auf das Erkennen einer Erkrankung, insbesondere einer Erkrankungsart, anhand von Meßwerten und das Zuordnen zu einem Krankheitsbegriff. Darüber hinaus umfaßt er hierin die Beurteilung der Wirksamkeit einer Therapie anhand von Meßwerten. Die erfindungsgemäßen Verfahren können mit weiteren, dem jeweiligen Fachmann bekannten Diagnoseverfahren kombiniert werden, so daß in diesem Falle das Verfahren lediglich eine (weitere) Entscheidungshilfe darstellt.

Der Begriff "hohes Klassifikationspotential" bedeutet, daß das Klassifikationspotential höher als das anderer Referenzmeßwerte oder Referenzmerkmale ist.

In einer bevorzugten Ausführungsform sind die erfindungsgemäßen Verfahren Verfahren die unter Verwendung von Indikatorstoffen ausgeführt werden. Diese Verfahren umfassen

- die Auswahl von mindestens zwei Indikatorstoffen, die für die Diagnose der Erkrankung verwendet werden, und

- das Bereitstellen eines Meßwertdatensatzes, der jeweils eine Vielzahl von Meßwerten für jeden Indikatorstoff umfaßt.

Unter einer Vielzahl von Meßwerten sind zumindest zwei Meßwerte zu verstehen.

Zweckmäßigerweise wird die Auswahl der Indikatorstoffe vor der Erzeugung des Referenzsystems ausgeführt, wobei das Referenzsystem unter Verwendung von Referenzmeßwerten für denselben Indikatorstoff bei einem Referenzobjekt erzeugt wird. Der Meßwertedatensatz sollte nach dem Erzeugen des Referenzsystems bereitgestellt werden. Er kann aber auch vor Erzeugen des Referenzsystems bereitgestellt werden.

Die Auswahl der Indikatorstoffe kann mittels DNA- oder Protein-Microarrays vorgenommen werden. Dazu werden DNA-Sequenzen oder Proteine, die die ausgewählten Indikatorstoffe binden können, auf eine feste Oberfläche aufgebracht. Die aufgebrachten DNA-Sequenzen oder Proteine werden in Kontakt mit einer biologischen Probe gebracht, die die ausgewählten Indikatorstoffe enthalten kann. Sind in der biologischen Probe die ausgewählten Indikatorstoffe enthalten, so werden diese gebunden. Die Anbindung der Indikatorstoffe kann mittels analytischer Verfahren, beispielsweise mittels Massenspektrometrie erfaßt werden, wodurch die Meßwerte erhalten werden.

Die Erfindung wird nachstehend ausführlicher erläutert.

Die Aufgabe der vorliegenden Erfindung wird dadurch gelöst, daß aus der Analyse der zum Einsatz kommenden Klassifikationsmethode solche Merkmale zu extrahieren sind, die einen größtmöglichen Beitrag zur Klassentrennung erwarten lassen. Die Quantifizierung des (vermutlichen) Klassifikationsbeitrages jedes in Betracht kommenden Merkmales führt zu einer Reihenfolge dieser Merkmale, die eine automatische Auswahl bewirkt.

Für dieses Vorgehen eignen sich in besonderer Weise solche Klassifikationsverfahren, die eine Graduierung der Klassenzuordnung beinhalten und eine weitgehende Interpretation des Zusammenhangs zwischen Trennfähigkeit und Merkmal ermöglichen. Beispielsweise erfüllt das Verfahren der Fuzzy Pattern Classification (FPC) nach [Bocklisch, S.F.: Prozeßanalyse mit unscharfen Verfahren. Verlag Technik, Berlin 1987] diese Anforderungen. Dieses FPC-Verfahren basiert auf folgenden Grundprinzipien:

Gegeben seien n **O**bjekte $O_1$, ..., $O_n$. Jedes dieser Objekte ist durch einen Vektor mit p **P**rimärinformationen (z.B. Meßwerte) beschrieben, $O_i = \{P_{1,i},...,P_{p,i}\}$, i = 1, ..., n. Da die Primärinformationen im Allgemeinen nicht für eine Klassifikation geeignet sind, werden aus diesen m **M**erkmale kreiert, also kann jedes Objekt auch durch seinen Merkmalsvektor charakterisiert werden $O_i = \{M_{1,i},...,M_{m,i}\}$. Der Übergang von Primärinformation zu Merkmalen ist häufig mit Datenreduktion und -komprimierung verbunden, so daß aus den Merkmalen die Primärinformationen nicht rekonstruierbar sind. In einfachster Weise können m der p Primärinformationen (m < p) als Merkmale deklariert werden. Eine weitere Möglichkeit besteht in der Zusammenfassung von Primärinformationen, beispielsweise für auszuwählende Werte $q_0$ und $q_1$ durch die Formel

$$M_{k,j} = \sqrt{\sum_{q=q_0}^{q_1} P_{q,j}^2} \qquad (\#\#)$$

Die Klassifikationsaufgabe wird durch ein vorgegebenes System von k **K**lassen $\overline{K} = \{K_1,...,K_k\}$ (k = 2, ...) festgelegt. Die Aufgabe ist gelöst, wenn ein Algorithmus existiert, der aufgrund der Primärinformationen eines Objekts dessen Zugehörigkeit zu einer der Klassen berechnet.

- Zur Festlegung des Algorithmus können Objekte als Lern- bzw. Referenzobjekte genutzt werden, wenn für sie die Klassenzuordnung a priori bekannt ist. In diesem Fall wird die Kenntnis der Klassenzuordnung ausgenutzt.
- Zur Testung des Algorithmus können Objekte als TestObjekte genutzt werden, wenn ihre Klassenzuordnung bekannt ist und somit die Richtigkeit der Klassifikation geprüft werden kann, wobei zu sichern ist, daß die Kenntnis der Klassenzuordnung nicht in die Berechnung einfließt.
- Aufgabe der Klassifikation ist es, für ein Objekt mit unbekannter Klassenzuordnung eine Zuordnung zu ermitteln, deren Richtigkeit aufgrund der anhand der Lern-/Test-Objekte nachgewiesene Leistungsfähigkeit des Algorithmus mit statistischer Sicherheit angenommen werden kann.

Jede Klasse $K_j \in \overline{K}$ (j = 1, ... , k) wird durch deren prototypischen Merkmalsvektor $K_j = \{S_{1,j},...,S_{m,j}\}$ repräsentiert, der aus m Merkmalswerten (den so genannten Merkmals-Schwerpunkten) besteht.

Die Ähnlichkeit $m_{ij}$ des i-ten Objektes $O_i$ zur j-ten Klasse $K_j$ wird aus den Objekt-Merkmalen und den Merkmals-Schwerpunkten über deren mehrdimensionalen Abstand berechnet:

$$\mu_{ij} = \mu(O_i, K_j) = \frac{1}{1 + \sum_{q=1}^{m} \frac{(M_{q,j} - S_{q,j})^{d_{q,J}}}{c_{q,j}}} , \qquad (\#)$$

wobei die Festlegung der freiwählbaren Parameter $S_{q,j}$, $d_{q,j}$ und $c_{q,j}$ ($q = 1, ..., m$; $j = 1,..., k$) an die konkrete Klassifikationsaufgabe gebunden ist.

Die Klassenzuordnung des Objektes $O_i$ zu einer der Klassen $K_1, ..., K_k$ erfolgt durch den Index $j_o$, der durch die größte Ähnlichkeit nach (#) charakterisiert wird:

$$\mu_{i,j_o} = \max\left\{\mu_{i,1}, ..., \mu_{i,k}\right\}.$$

Bei der Entwicklung des Algorithmus wird die Güte der Klassifikation maßgeblich durch die Anzahl der richtig reklassifizierten Lern-Objekte je Klasse definiert, also für jede Klasse durch Angabe des Prozentsatzes der zur Klasse gehörenden und auch mittels Algorithmus zur Klasse zugeordneten Objekte von allen zur Klasse gehörenden Objekte. Es können weitere Maßzahlen definiert werden, die auf die Güte der Klassifikation hinweisen, wie beispielsweise die mittlere Entscheidungssicherheit $\overline{E}$ zwischen zwei Klassen $K_r$ und $K_s$, ermittelt über alle $n$ Objekte:

$$\overline{E}_{rs} = \frac{1}{n} \cdot \sum_{q=1}^{n} \frac{\left|\mu_{q,r} - \mu_{q,s}\right|}{\mu_{q,r} + \mu_{q,s}},$$

Gemäß (#) wird die Zuordnung eines Objektes zu einer Klasse um so größer, je kleiner die Abstände der Objektmerkmale zu den entsprechenden prototypischen Schwerpunkten der Klasse sind. Die Ablehnung eines Objektes zu einer Klasse wird folglich um so größer, je größer diese Abstände sind.

Im Falle einer alternativen dichotomen Klassifikationsaufgabe, bei der die Zuordnung zu einer Klasse A mit der Ablehnung zur anderen Klasse B verbunden ist, wird als Kriterium für die Quantifizierung des Klassifikationspotentials einer Primärinformation oder eines Merkmales eine Funktion angewandt, die diesen Abstände bewertet.

Die Testgröße T des statistischen t-Tests leistet das Gewünschte [Bronstein, I.N.; Semendjajew, K.A.: Taschenbuch der Mathematik. Verlag Nauka, Moskau, 1989]. Werden nämlich die Primärinformationen oder die Merkmale gemäß ihrer a priori Klassenzuordnung gruppiert, so liefert die Testgröße des t-Tests eine quantitative Aussage zum Abstand ihrer Mittelwerte $\overline{m_A}$ und $\overline{m_B}$. Je größer diese Testgröße ist, um so sicherer ist unter dem statistischen Aspekt die Annahme, daß der Abstand der Klassenprototypen signifikant groß ist. Dies spricht für ein hohes Klassifikationspotential.

Die formale Ähnlichkeit der Testgröße T und der Ähnlichkeitsfunktion (#) führt zur Festlegung der freiwählbaren Parameter des Algorithmus: Für die Merkmals-Schwerpunkte verwende man Mittelwerte $\overline{m_A}$ und $\overline{m_B}$, die Standardabweichungen $\overline{s_A}^2$ bzw. $\overline{s_B}^2$ als Maß für die Schwankungsbreite dienen als Parameter $c_{p,j}$. Schließlich werden die freien Parameter $d_{p,j}$ konstant mit dem Wert 2 belegt.

Damit sind alle Voraussetzungen geschaffen, folgendes Verfahren zur Festlegung der freiwählbaren Parameter des Algorithmus (#) anzuwenden:

a) Die Primärinformationen werden einzeln hinsichtlich ihres Klassifikationspotentiales untersucht.

b) Es werden Referenzmerkmale gebildet, indem Primärinformationen mit hohem Klassifikationspotential zusammengeführt werden. Jedes Referenzmerkmal ist definiert über die jeweilige Auswahl von zu verarbeitenden Primärinformationen und die verwendete Berechnungsformel.

c) Diese Referenzmerkmale werden hinsichtlich ihres Klassifikationspotentiales gemäß t-Test untersucht und in der Reihenfolge ihres vermutlichen Beitrages zur Klassentrennung geordnet.

d) Der Algorithmus (#) wird auf eine ausgewählte Referenzmerkmalsmenge nach (b) angewandt, wobei mit einem Referenzmerkmal mit dem höchsten Klassifikationspotential zu beginnen ist, die Anzahl der zu berücksichtigenden Referenzmerkmale schrittweise erhöht wird und die Erweiterung gemäß der Ordnung nach Punkt (c) erfolgt.

e)Es wird die Güte der Klassifikation durch die Analyse der Reklassifikation bewertet.

f) Das Verfahren wird abgebrochen, wenn sich die Güte bei Hinzunahme eines weiteren Referenzmerkmals in den Algorithmus (#) gemäß (d) nicht verbessert.

Ist der Algorithmus nach den Schritten (a) bis (f) spezifiziert, kann für ein Objekt unbekannter Herkunft die Klassenzuordnung ermittelt werden:

g) Es werden Merkmale gebildet, indem die Primärinformationen in der jeweiligen Auswahl entsprechend der Berechnungsformel (Formel ##) zusammengeführt werden. Es werden so viele Merkmale ermittelt, wie durch den Schritt (f) angegeben wurden.

h) Der Algorithmus (#) wird auf diese Merkmalsmenge angewandt.

i) Durch Auswertung der Zugehörigkeitswerte wird die Zuordnung bestimmt, indem diese Klasse ausgewählt wird, zu der eine höhere Zugehörigkeit nach (h) ermittelt wurde. Die Berechnung der Entscheidungssicherheit beschreibt die Verläßlichkeit der Klassifikation, wobei ein Wert nahe 1 eine hohe Sicherheit der Zuordnung vermittelt, dagegen ein Wert nahe Null eine unsichere Zuordnung anzeigt.

Das Verfahren wird nachstehend anhand eines Beispiels näher erläutert, ohne daß diese Erfindung auf dieses Beispiel beschränkt werden soll.

Fig. 1 zeigt einen Ausschnitt von Meßwerten für ein Referenzobjekt.

Beispiel

Die Datensätze, auf denen das Beispiel basiert, stammen aus der "Clinical Proteomics Program Databank" des National Cancer Institut (http://clinicalproteomics.steem.com/seldi-collection.php). Sie sind öffentlich zugänglich.

Unter "Ovarian Dataset 8-7-02" stehen Proben für die Thematik Ovarian-Carcinom zur Verfügung, davon 162 Carcinom-Fälle und 91 Datensätze als Kontrollgruppe. Die Daten resultieren aus der massenspektrometrischen Auswertung von WCX2-Protein-Arrays.

Die Klassifikationsaufgabe, aufgrund dieser Daten die Zuordnung zu den Klassen "Carcinom" versus "Nicht-Carcinom" zu vollziehen, gilt als gelöst. Es ist bekannt, daß es mathematisch möglich ist, die Reklassifikation 100%ig korrekt durchzuführen. Eine Bewertung der Meßwerte hinsichtlich ihres Beitrages zur Klassifikation erfolgte bisher nicht. Als Referenz wird das Auswerteprogramm "Proteome Quest β-Version 1.0" angegeben. Kernstück dieses Klassifikationsverfahren waren genetische Algorithmen. Die Meßwerte (d.h. die in Fig. 1 für bestimmte Massezahlen M/Z gezeigten Intensitäten) wurden zwischen 0 und 100 normiert.

Aus der gegebenen Datenmenge von insgesamt 253 Fällen werden $n_A = 80$ Carcinom-Fälle (entspricht Klasse A oder Krank-Klasse; alle Datensätze mit der Filebeschreibung Ovarian_Cancer_daf-0xxx, xxx = 601, ..., 691), $O_i^A$ (i = 1, ..., 80) und $n_B = 40$ Kontrollfälle (entspricht Klasse B oder Gesund-Klasse; alle Datensätze mit der Filebezeichnung Control_daf-0yyy, y = 181, ..., 225), $O_i^B$ (i = 1, ..., 40) als Referenzobjekte ausgewählt. Die Ziffernfolge der Filebezeichnung wird im weiteren als Objekt-Bezeichnung verwendet, sie läßt eine eindeutig Identifizierung der verwendeten Daten zu. Jeder der nicht zu den Referenzobjekten gehörenden Datensätze kann als Test- oder Einsatzfall genutzt werden.

Für jedes Objekt stehen 15154 Primärinformationen zur Verfügung, die durch die Massezahlen charakterisiert sind. Zur Vereinfachung der Schreibweise wurden diese Argumente in aufsteigender Reihenfolge von 1 bis 15154 numeriert. Diese Nummern werden als Spektrallinien-Nummern betrachtet.

Fig. 1 zeigt einen Ausschnitt von Meßwerten (Intensitäten) für ein Referenzobjekt mit der Objektbezeichnung 601.

Zur Festlegung des Klassifikationsalgorithmus werden lediglich die 120 ausgewählten Referenzobjekte berücksichtigt. Alle Primärinformationen $P_{i,q}$ (Referenzmeßergebnisse der i = 1, ..., 120 Referenzobjekte an den Spektrallinien-Nr. q = 1, ..., 15154) werden in einer elektronisch lesbaren Tabellen bereitgestellt. Für diese Referenzobjekte ist bekannt, zu welcher der beiden Klassen sie zuzuordnen sind.

*1. Erzeugen des Referenzsystems*

(a) Für jede Spektrallinie wird die Testgröße $T_q$ (q = 1, ..., 15154) ermittelt:

$$\overline{m_q^A} = \frac{1}{n_A} \cdot \sum_{O_i^A} P_{q,i} \,, \quad \overline{m_q^B} = \frac{1}{n_B} \cdot \sum_{O_i^B} P_{q,i}$$

$$\overline{S_q^A}^2 = \frac{1}{n_A - 1} \cdot \sum_{O_i^A} \left( P_{q,i} - \overline{m_q^A} \right)^2 \,, \quad \overline{S_q^B}^2 = \frac{1}{n_B - 1} \cdot \sum_{O_i^B} \left( P_{q,i} - \overline{m_q^B} \right)^2$$

$$T_q = \frac{\left|\overline{m_q^A} - \overline{m_q^B}\right|}{\sqrt{(n_A - 1) \cdot \overline{s_q^A}^2 + (n_B - 1) \cdot \overline{s_q^B}^2}} \cdot \sqrt{\frac{n_A \cdot n_B \cdot (n_A + n_B - 2)}{n_A + n_B}}$$

Für alle Indizes q = 1,..., 15154 werden die Werte $T_q$ in einer Tabelle zusammengefaßt und der Größe absteigend nach geordnet. In der nachfolgenden Tabelle 1 sind die 20 Spektrallinien mit den größten Werten $T_q$ angegeben.

Tabelle 1: Klassifikationspotential der Referenzmeßwerte

| Nr. q | Massezahl | $\overline{m_q^A}$ | $\overline{s_q^A}^2$ | $\overline{m_q^B}$ | $\overline{s_q^B}^2$ | $T_q$ | markiert |
|-------|-----------|------|------|------|------|-------|----------|
| 1681 | 244,95 | 35,50 | 7,52 | 72,70 | 11,29 | 235,4 | 1 |
| 1682 | 245,24 | 38,72 | 7,89 | 76,15 | 11,15 | 232,8 | 1 |
| 1680 | 244,66 | 25,32 | 5,31 | 53,35 | 9,27 | 230,7 | 1 |
| 1683 | 245,54 | 35,83 | 7,35 | 70,12 | 11,07 | 221,6 | 1 |
| 1684 | 245,83 | 31,17 | 6,35 | 60,44 | 10,94 | 203,0 | 1 |
| 1679 | 244,37 | 17,14 | 2,65 | 31,68 | 6,17 | 197,9 | 1 |
| 1685 | 246,12 | 25,99 | 5,01 | 48,98 | 9,93 | 185,1 | 1 |
| 546 | 25,59 | 32,71 | 5,09 | 51,25 | 7,64 | 173,3 | |
| 1686 | 246,42 | 20,75 | 3,58 | 36,82 | 7,72 | 170,8 | 1 |
| 547 | 25,68 | 30,00 | 4,82 | 46,43 | 6,90 | 166,1 | |
| 545 | 25,50 | 42,69 | 6,53 | 63,76 | 8,64 | 163,3 | |
| 2313 | 464,36 | 17,20 | 1,57 | 23,85 | 3,33 | 163,1 | |
| 2194 | 417,73 | 39,41 | 2,21 | 47,01 | 3,34 | 163,0 | |
| 2312 | 463,96 | 18,65 | 2,08 | 26,83 | 3,99 | 162,1 | |
| 1687 | 246,71 | 16,84 | 2,44 | 27,48 | 5,53 | 160,5 | 1 |
| 2239 | 435,08 | 32,61 | 2,95 | 25,18 | 1,85 | 159,4 | |
| 2195 | 418,11 | 38,28 | 2,18 | 45,35 | 3,12 | 158,3 | |
| 2314 | 464,76 | 15,92 | 1,20 | 20,88 | 2,59 | 157,6 | |
| 2240 | 435,46 | 28,64 | 2,69 | 22,07 | 1,58 | 155,8 | |
| PPP | 25,78 | 28,34 | 4,65 | 42,80 | 6,35 | 155,1 | |

Um Primärinformationen zu Referenzmerkmalen zusammenzufassen, sind alle Zeilen der obigen Tabelle 1 zu Beginn unmarkiert.

(b) Der bislang höchste unmarkierte Wert $T_q$ initiiert das nächste Referenzmerkmal. Zu Beginn der Referenzmerkmalsbildung führt q = 1681 zum ersten Referenzmerkmal. Um die q-te Spektrallinie wird ein maximales Intervall Iq mit folgenden Eigenschaften festgelegt:

- die Intervallgrenzen $q_{UG}$ und $q_{OG}$ sind nicht weiter als $q_0$ von q entfernt, also $\mathbf{q}\text{-}\mathbf{q_0} \leq \mathbf{q_{UG}} < \mathbf{q} < \mathbf{q_{OG}} \leq \mathbf{q}\text{+}\mathbf{q_0}$
- jede Testgröße $T_{q'}$ für eine Spektrallinie innerhalb dieses Intervalls ($\mathbf{q_{UG}} \leq \mathbf{q'} \leq \mathbf{q_{OG}}$) überschreitet eine Mindestgröße to.

Für alle im Intervall I liegenden Spektrallinien werden die Primärinformationen zum k-ten Merkmal wie folgt zusammengeführt:

$$M_{q,i} = \sqrt{\sum_{r=q_{UG}}^{q_{OG}} \left(P_{r,i}\right)^2}$$

Die Parameter $q_0$ und $t_0$ können frei gewählt werden. Für die untersuchte Datenauswahl werden $t_0 = 100$ und $q_0 = 10$ festgelegt.

Bei $q_0 = 10$ werden für jedes Referenzmerkmal maximal 21 Spektrallinien verbraucht, so daß für sieben Referenzmerkmale (7 x 21 =) 147 Spektrallinien benötigt werden. Damit wird mit 150 Referenzmerkmalen die Bildung von mindestens 8 Referenzmerkmalen gewährleistet. Da aufgrund $t_0$ gemäß Verfahrensschritt (b, 2. Anstrich) in der Regel nicht jedes Referenzmerkmal 21 Spektrallinien verbraucht, können im allgemeinen mehr als die ermittelte Mindestanzahl von Referenzmerkmalen ermittelt werden. Die Anzahl der Referenzmerkmale wird entweder von Anwender des erfindungsgemäßen Verfahrens vorgegeben oder durch Schritt (f) bestimmt, falls mit der gewählten Anzahl das Maximum noch nicht gefunden wird (siehe Tabelle 6).

$t_0$ wird so gewählt, daß bei der gewählten oder gemäß Schritt (f) bestimmten Anzahl von Merkmalen unter Berücksichtigung von $q_0$ die erforderlich Anzahl von Spektrallinien tatsächlich zur Verfügung steht, d.h., daß bei acht Referenzmerkmalen zumindest 150 Spektrallinien zur Verfügung stehen. Das ist bei $t_0 = 100$ der Fall.

Tabelle la zeigt die Auswahl der Spektrallinien unter Berücksichtigung von $q_0$ und $t_0$ für das erste Referenzmerkmal.

Tabelle 1a: Bei der Bildung des ersten Referenzmerkmals berücksichtigte Spektrallinien für $q_0 = 10$

| Spektrallinie Nr. q | $T_q$ | Berücksichtigung bei der Referenzmerkmalsbildung | Anmerkung |
|---|---|---|---|
| 1671 | 39,9 | Nein | 1681-10; $< t_0$ |
| 1672 | 27,7 | Nein | $< t_0$ |
| 1673 | 23,6 | Nein | $< t_0$ |
| 1674 | 33,5 | Nein | $< t_0$ |
| 1675 | 74,8 | Nein | $< t_0$ |
| 1676 | 144,4 | Ja | $q_{UG}$ |
| 1677 | 140,7 | Ja | |
| 1678 | 139,4 | Ja | |
| 1679 | 197,7 | Ja | |
| 1680 | 230,7 | Ja | |
| 1681 | 235,4 | Ja | Initiale Spektrallinie |
| 1682 | 232,8 | Ja | |
| 1683 | 221,6 | Ja | |
| 1684 | 203,0 | Ja | |
| 1685 | 185,1 | Ja | |
| 1686 | 170,8 | Ja | |
| 1687 | 160,5 | Ja | |
| 1688 | 152,8 | Ja | |
| 1689 | 140,7 | Ja | |
| 1690 | 124,0 | Ja | |

(fortgesetzt)

| Spektrallinie Nr. q | $T_q$ | Berücksichtigung bei der Referenzmerkmalsbildung | Anmerkung |
|---|---|---|---|
| 1691 | 124,4 | Ja | 1681+10=$q_{OG}$ |

Unter diesen Bedingungen ergibt sich für jedes Referenzobjekt $O^{(i)}$ das erste Referenzmerkmal $M_1^{(i)}$ nach der Vorschrift:

$$M_{1,i} = \sqrt{\sum_{r=1676}^{1691} (P_{r,i})^2}$$

Alle in diese Summation eingehenden Indizes der Primärinformationen werden markiert (in Tabelle 1 durch 1 symbolisiert). Man fahre nun mit (b) fort und bilde das nächste Referenzmerkmal (hier mit q = 546.)

Das Verfahren wird abgebrochen, wenn unter den Einschränkungen durch $q_0$ und $t_0$ keine weiteren Referenzmerkmale gebildet werden können oder wenn eine zuvor festgelegte Anzahl von Referenzmerkmalen ermittelt wurde.

Beschränkt man die Anzahl der Referenzmerkmale auf 15, so findet man folgende Tabelle 2 der Referenzmerkmale, exemplarisch angegeben für 6 Referenzobjekte.

Tabelle 2: Referenzmerkmale $M_{q,i}$ für 6 Referenzobjekte

| Referenz merkmal- Nr. q | | | Referenzobjekt-Nr. i | | | | | |
|---|---|---|---|---|---|---|---|---|
| | | | 689 | 688 | 687 | 225 | 224 | 223 |
| | | | a priori Klassenzuordnung | | | | | |
| | Initiale Spektrallinie | Massezahl | A | A | A | B | B | B |
| 1 | 1681 | 244,95 | 75,86 | 112,45 | 109,68 | 212,65 | 214,92 | 168,02 |
| 2 | 546 | 25,59 | 68,78 | 127,46 | 116,15 | 142,40 | 150,58 | 200,07 |
| 3 | 2313 | 464,36 | 52,15 | 54,65 | 50,89 | 64,43 | 69,31 | 83,29 |
| 4 | 2194 | 417,73 | 84,49 | 93,31 | 86,54 | 102,01 | 112,25 | 109,49 |
| 5 | 2239 | 435,08 | 87,87 | 87,43 | 85,73 | 60,45 | 61,74 | 76,18 |
| 6 | 1596 | 220,75 | 47,60 | 67,75 | 64,46 | 106,73 | 106,13 | 91,00 |
| 7 | 1738 | 261,89 | 90,07 | 81,60 | 82,98 | 107,84 | 101,09 | 104,00 |
| 8 | 577 | 28,60 | 23,65 | 33,22 | 32,92 | 36,16 | 38,38 | 52,71 |
| 9 | 183 | 2,79 | 10,52 | 10,66 | 10,65 | 10,56 | 10,57 | 11,35 |
| 10 | 566 | 27,51 | 26,09 | 39,49 | 39,12 | 43,59 | 47,59 | 65,35 |
| 11 | 704 | 42,68 | 52,15 | 65,29 | 69,82 | 77,23 | 83,11 | 110,46 |
| 12 | 6784 | 6003,64 | 46,97 | 47,31 | 56,70 | 63,05 | 59,66 | 72,07 |
| 13 | 588 | 29,71 | 10,53 | 12,92 | 13,62 | 13,39 | 15,12 | 19,96 |
| 14 | 2173 | 409,76 | 33,20 | 32,29 | 31,70 | 43,49 | 41,04 | 38,16 |
| 15 | 2252 | 440,15 | 36,74 | 36,69 | 33,10 | 38,86 | 41,28 | 46,86 |

(c) Diese Merkmale werden in gleicher Weise wie die Primärinformationen unter (a) hinsichtlich des Beitrages zur Klassifikation untersucht, also die Testgrößen $T_q^*$ berechnet und der Größe nach absteigend geordnet (Tabelle 3).

Tabelle 3: Klassifikationspotential der Referenzmerkmale

| Referenzmerkmals-Nr. q | $\overline{m_q^{A*}}$ | $\overline{s_q^{A*}}^2$ | $\overline{m_q^{B*}}$ | $\overline{s_q^{B*}}^2$ | $T_q^*$ |
|---|---|---|---|---|---|
| 1 | 93,13 | 15,52 | 174,41 | 26,39 | 232,38 |
| 4 | 89,64 | 4,34 | 104,00 | 6,51 | 157,38 |
| 3 | 48,97 | 5,11 | 66,30 | 8,73 | 150,00 |
| 2 | 117,28 | 19,37 | 172,84 | 24,40 | 148,46 |
| 7 | 87,75 | 5,89 | 105,08 | 7,90 | 147,96 |
| 5 | 86,50 | 6,76 | 70,89 | 4,61 | 143,94 |
| 8 | 32,59 | 5,02 | 46,47 | 7,22 | 134,43 |
| 11 | 69,33 | 15,18 | 121,00 | 34,94 | 123,75 |
| 9 | 10,54 | 0,17 | 11,02 | 0,31 | 122,38 |
| 12 | 47,30 | 8,55 | 68,20 | 12,52 | 117,80 |
| 6 | 59,47 | 13,61 | 86,70 | 13,51 | 113,47 |
| 13 | 13,49 | 1,83 | 18,01 | 2,95 | 112,94 |
| 14 | 34,65 | 2,16 | 39,78 | 3,25 | 112,81 |
| 10 | 40,29 | 7,76 | 57,03 | 9,99 | 110,66 |
| 15 | 37,91 | 2,98 | 44,74 | 4,55 | 108,03 |

(d) Man wähle beginnend mit m' = 1 die ersten m' Referenzmerkmale aus obiger Tabelle 3 aus und nutze die angegebenen Werte zur Parametrisierung von (#). So ermittelt man für jedes Objekt die quantitative Zugehörigkeit zur Klasse A:

$$\mu_{i,A} = \cfrac{1}{1 + \sum_{q=1}^{m'} \cfrac{\left(M_{q,i} - \overline{m_q^{A*}}\right)^2}{\overline{s_q^{A*}}^2}}$$

wobei die Numerierung der Referenzmerkmale nach ihrer Reihenfolge gemäß der absteigenden Größe von $T_p^*$ erfolgt. In Analogie wird die Zugehörigkeit zur Klasse B ermittelt.

Im Ergebnis dieses Schrittes erhält man eine Aufstellung, in der zu allen Referenzobjekten diese Zugehörigkeiten zusammengefaßt sind. Tabelle 4 zeigt die Zugehörigkeiten für die 6 beispielhaften Objekte, die bereits in Tabelle 2 dargestellt worden sind.

Tabelle 4: Zugehörigkeitswerte für beispielhafte Referenzobjekte für m' = 1

| Referenzobjekt | Klassenzugehörigkeit | $m_{i,A}$ | $m_{i,B}$ |
|---|---|---|---|
| 689 | A | 1,00 | 0,07 |
| 688 | A | 0,39 | 0,15 |
| 687 | A | 0,47 | 0,14 |
| 225 | B | 0,02 | 1,00 |
| 224 | B | 0,02 | 1,00 |

(fortgesetzt)

| Referenzobjekt | Klassenzugehörigkeit | $m_{i,A}$ | $m_{i,B}$ |
|---|---|---|---|
| 223 | B | 0,04 | 0,94 |

Die Berechnung der Zugehörigkeiten wird mit schrittweise Zunahme der Anzahl der einzubeziehenden Referenzmerkmale wiederholt.

(e) Um die Güte der Klassifikation zu bewerten, ist die Richtigkeit der Einzelklassifikation zu prüfen und die Entscheidungssicherheit zu ermitteln. Exemplarisch ist dies für die Auswertung des ersten Referenzmerkmals für die sechs beispielhaften Referenzobjekte in Tabelle 5 angegeben, wobei die Spalte "Klassenzugehörigkeit" die bekannte Klassifizierung des Referenzobjektes zeigt, während die Spalte "Klassenzuordnung" die Klassifizierung des Referenzobjektes gemäß den in Schritt (d) ermittelten Zugehörigkeitswerten wiedergibt.

Tabelle 5: Klassenzuordnung für beispielhafte Referenzobjekte

| Referenzobjekt | Klassenzugehörigkeit | $m_{i,A}$ | $m_{i,B}$ | Klassenzuordnung | Entscheidungs-Sicherheit |
|---|---|---|---|---|---|
| 689 | A | 1,00 | 0,07 | A | 86,9 % |
| 688 | A | 0,39 | 0,15 | A | 44,4 % |
| 687 | A | 0,47 | 0,14 | A | 54,1% |
| 225 | B | 0,02 | 1,00 | B | 96,1% |
| 224 | B | 0,02 | 1,00 | B | 96,1% |
| 223 | B | 0,04 | 0,94 | B | 91,8% |

Ermittelt über alle 120 Referenzobjekte findet man in Abhängigkeit von der Anzahl der berücksichtigten Referenzmerkmale folgende Übersicht (Tabelle 6):

Tabelle 6: Richtige Klassenzuordnung aller Referenzobjekt in Anhängigkeit von der Anzahl der berücksichtigten Referenzmerkmale

| Merkmals-Anzahl | Richtige Klassenzuordnung | | Entscheidungssicherheit |
|---|---|---|---|
| | Klasse A | Klasse B | |
| 1 | 97,5% | 95,0% | 77,1% |
| 2 | 97,5% | 97,5% | 79,5% |
| 3 | 97,5% | 97,5% | 79,1% |
| 4 | 97,5% | 98,8% | 79,9% |
| 5 | 97,5% | 98,8% | 81,2% |
| 6 | 97,5% | 100,0% | 84,0% |
| 7 | 97,5% | 100,0% | 83,8% |
| 8 | 100,0% | 100,0% | 83,2% |
| 9 | **100,0%** | **100,0%** | **83,4%** |
| 10 | 100,0% | 100,0% | 83,0% |
| 11 | 100,0% | 100,0% | 82,7% |
| 12 | 100,0% | 100,0% | 82,3% |
| 13 | 100,0% | 100,0% | 81,9% |
| 14 | 100,0% | 100,0% | 81,5% |
| 15 | 100,0% | 100,0% | 81,1% |

(f) Die obige Tabelle 6 wird schrittweise ausgefüllt. Im ersten Schritt - bei Verwendung nur eines Referenzmerkmales im Algorithmus (#) - erhält man die Zeile 1. Aufgrund der Angaben zur richtigen Klassenzuordnung ist erkennbar, daß die Reklassifikation nicht vollständig gelingt. Folglich wird das Verfahren fortgesetzt und schrittweise die Anzahl der Referenzmerkmale vergrößert.

Bei Verwendung von 8 Referenzmerkmalen wird erstmalig eine vollständige Reklassifikation erreicht. Die weitere Bewertung der Klassifikationsgüte orientiert sich nun am Wert der Entscheidungssicherheit. Es ist zu beobachten, daß hierbei ein Maximum bei Verwendung von 9 Referenzmerkmalen erreicht wird. Damit kann das Verfahren abgebrochen werden, der Klassifikationsalgorithmus ist vollständig beschrieben.

Sollte ein derartiges Maximum nicht erreicht werden, müssen weitere Merkmale gemäß Schritt (b) gebildet werden.

*2. Diagnose einer Erkrankung unter Verwendung des Referenzsystems für Objekte (unbekannter) Klassifikation*

Die Anwendung dieses eben spezifizierten Klassifikationsalgorithmus wird an den Objekten mit den Nummern 262 und 263 ausgeführt, die als Testobjekte dienen.

(g) Zunächst werden die 9 Merkmale entsprechende der zugrundeliegenden Intervalle ermittelt, d.h. der Intervalle, die in Schritte (b) zur Bestimmung der Referenzmerkmale eingesetzt wurden. Die für die beiden Objekte ermittelten Merkmale sind in Tabelle 7 dargestellt:

Tabelle 7: Für die Testobjekte ermittelten Merkmale

| Merkmals-Nr. q | $q_{UG}$ | $q_{OG}$ | Objekt Nr. 262 $M_q$ | Objekt Nr. 263 $M_q$ |
|---|---|---|---|---|
| 1 | 1676 | 1691 | 117,10 | 217,35 |
| 4 | 2192 | 2197 | 92,95 | 123,11 |
| 3 | 2310 | 2317 | 53,78 | 79,56 |
| 2 | 542 | 555 | 125,43 | 205,49 |
| 7 | 1736 | 1740 | 93,58 | 106,10 |
| 5 | 2236 | 2243 | 75,91 | 66,69 |
| 8 | 568 | 587 | 33,30 | 51,53 |
| 11 | 698 | 706 | 71,11 | 104,02 |
| 9 | 182 | 187 | 11,27 | 10,85 |

(h) Diese Merkmalswerte werden für jedes Objekt in Algorithmus (#) jeweils für Klasse A als auch für Klasse B eingesetzt (Tabelle 8):

Tabelle 8: Zugehörigkeitswerte für die Testobjekte

| Objekt | $m_{i,A}$ | $m_{i,B}$ |
|---|---|---|
| 262 | 0,036 | 0,043 |
| 263 | 0,005 | 0,642 |

(i) Der Vergleich der beiden Zugehörigkeiten zu A und zu B und die Berechnung der Entscheidungssicherheit schließen die Bearbeitung ab (Tabelle 9).

Tabelle 9: Klassifizierung der Testobjekte

| Objekt | $m_{i,A}$ | $m_{i,B}$ | Klassenzuordnung | Entscheidungssicherheit |
|---|---|---|---|---|
| 262 | 0,036 | 0,043 | B | 8,9 % |
| 263 | 0,005 | 0,642 | B | 98,5 % |

Demnach wurden unter Verwendung des erfindungsgemäßen Verfahrens beide Testobjekte der "Gesund-Klasse" zugeordnet. Die entspricht dem tatsächlichen Befund. Die Güte der Klassifikation spiegelt sich in der Entscheidungssicherheit wider. Demnach zeigt sich, daß für Testobjekt 262 die Meßwerte, die für dieses Testobjekt vorliegen, nur eine Klassifizierung mit einer geringen Sicherheit zulassen.

Das erfindungsgemäße Verfahren ermöglicht somit mit vergleichsweise geringem Aufwand einerseits eine Klassifizierung von Objekten mit unbekannten Zuordnung, wobei gleichzeitig die Güte der Klassifikation (anhand der Entscheidungssicherheit) bewertet wird. Aus der Güte der Klassifikation kann beispielsweise ein Arzt die Qualität der zur Verfügung stehenden Primärinformationen (Meßwerte) beurteilen. Somit wird eine optimale Klassifikationsleistung des Gesamtsystems gesichert, wodurch beispielsweise die Gefahr von Fehldiagnosen wesentlich verringert werden kann.

## Patentansprüche

1. Verfahren zur Klassifikation von Meßwerten in der medizinischen und biochemischen Analytik, umfassend

   - Erzeugen eines Referenzsystems unter Verwendung von Refe-renzmeßwerten von Referenzobjekten, von denen die Klassenzuordnung bekannt ist, wobei die Referenzmeßwerte eine fortlaufende Achseneinteilung aufweisen, umfassend

      - die Bildung von Referenzmerkmalen, die ein hohes Klassifikationspotential aufweisen, auf Basis der Referenzmeßwerte aller Referenzobjekte durch Zusammenfassen von benachbarten Referenzmesswerten mit hohem Klassifikationspotential, und
      - Quantifizierung des Klassifikationspotentials der Referenzmerkmale und Ordnen der Referenzmerkmale in der Reihenfolge ihres Klassifikationspotentials, beginnend mit dem Referenzmerkmale mit dem höchsten Klassifikationspotential;

   - Klassifikation der Meßwerte unter Verwendung der Merkmale des Referenzsystems.

2. Verfahren nach Anspruch 1, umfassend

   - Erzeugen eines Referenzsystems unter Verwendung von Referenzmeßwerten von Referenzobjekten, von denen bekannt ist, ob eine Erkrankung vorliegt, "Krank-Klasse", oder nicht - "Gesund-Klasse", umfassend die Schritte

      (a) Bestimmen des Klassifikationspotentials der Referenzmeßwerte aller Referenzobjekte;
      (b) Bilden von Referenzmerkmalen
      (c) Ordnen der Referenz merkmale in der Reihenfolge ihres Klassifikationspotentials
      (d) Ermittelung von Zugehörigkeitswerten für jedes Referenzobjekt für die Zugehörigkeit zur "Gesund-Klasse" oder zur "Krank-Klasse", beginnend mit dem Referenzmerkmal mit dem höchsten Klassifikationspotential;
      (e) Bestimmen der Güte der Klassifikation durch Reklassifikation der Referenzobjekte und
      (f) Wiederholung der Schritte (d) und (e), indem in Schritt (d) das nächst folgende Referenzmerkmal gemäß der in Schritt (c) angegebenen Reihenfolge einbezogen wird, solange sich die Güte der Klassifikation gemäß Schritte (e) verbessert;

   - Klassifizierung eine unbekannten Objects unter Verwendung des Referenzsystems, umfassend die Schritte

      (g) Bilden von Merkmalen, indem die Meßwerte des Objects wie in Schritt (b) zusammengeführt werden, wobei die Anzahl und Auswahl der Merkmale der Anzahl und Auswahl der gemäß Schritt (f) gebildeten Referenzmerkmale entspricht;
      (h) Ermittelung von Zugehörigkeitswerten für diese Meßwerte und
      (i) Feststellen, ob die in Schritt (h) ermittelten Zugehörigkeitswerte die Zugehörigkeit zur "Krank-Klasse" belegen.

3. Verfahren nach Anspruch 2, **dadurch gekennzeichnet, daß** Schritt (i) die Bestimmung der Entscheidungssicherheit umfaßt.

4. Verfahren nach einem der vorstehenden Ansprüche, **dadurch gekennzeichnet, daß** das Klassifikationspotential in Schritt (b) und Schritt (c) mittels t-Test bestimmt wird.

5. Verfahren nach einem der vorstehenden Ansprüche, **dadurch gekennzeichnet, daß** für die Ermittlung der Zugehörigkeitswerte in Schritt (d) ein Algorithmus verwendet wird, der die Ähnlichkeit jedes Referenzobjektes zur "Gesund-Klasse" oder "Krank-Klasse" quantifiziert.

6. Verfahren nach einem der vorstehenden Ansprüche, **dadurch gekennzeichnet, daß** es ferner

- die Auswahl von mindestens zwei Indikatorstoffen, die für die Diagnose der Erkrankung verwendet und für die Messwerte erhalten werden, und
- das Bereitstellen eines Meßwertdatensatzes, der jeweils eine Vielzahl von Meßwerten für jeden Indikatorstoff umfaßt,
umfaßt.

**Claims**

1. Method for classifying measured values in the medical and biochemical analytics which method comprises

- the generation of a reference system using reference measured values of reference objects the classification of which is known, said reference measured values exhibit a successive axis graduation comprising

- formation of reference characteristics having a high classifying potential based on the reference measured values of all reference objects by summarizing adjacent reference measuring values with high classifying potential; and
- quantification of the classifying potential of the reference characteristics and arrangement of the reference characteristics in the order of their classifying potential starting from the reference characteristic with the highest classifying potential;

- the classification of the measured values using the characteristics of the reference system.

2. A Method according to claim 1, which method comprises

- the generation of a reference system using reference measured values of reference objects from which is known whether a disease is present, "ill class", or not, "healthy class", comprising the steps

(a) determining the classifying potential of the reference measured values of all reference objects;
(b) forming reference characteristics;
(c) arranging the reference characteristics in the order of their classifying potential;
(d) establishing affiliation values for each reference object for the affiliation to the "healthy class" or to the "ill class" starting from the reference characteristic with the highest classifying potential;
(e) determining the quality of the classification by re-classifying the reference objects, and
(f) repeating the steps (d) and (e) by including in step (d) the following reference characteristic in accordance to the order given in step (c) as long as the quality of the classification according to step (e) is improved;

- the classification of an unknown object using the reference system comprising the steps

(g) forming characteristics by merging the measured values of the object such as in step (b) wherein the number and choice of the characteristics corresponds to the number and choice of the reference characteristics formed in accordance to step(f);
(h) establishing affiliation values for said measured values; and
(i) ascertaining whether the affiliation values established in step (h) prove the affiliation co the "ill class".

3. The method according to claim 2 **characterized in that** step (i) comprises the determination of the decision certainty.

4. The method according to any one of the preceding claims **characterized in that** the classifying potential in step (b) and step (c) is determined by means of the t-test.

**5.** The method according to any one of the preceding claims **characterized in that** an algorithm is used for the establishment of the affiliation values in step (d), which quantifies the similarity of each reference object to the "healthy class", or "ill class".

**6.** The method according to any one of the preceding claims **characterized in that** it further comprises

- the choice of at least two indicators used for the diagno-sis of the disease and for which measured values are obtained, and
- the provision of a measured value record each comprising a plurality of measured values for each indicator, respectively.

**Revendications**

**1.** Procédé de classification de valeurs mesurées dans l'analytique médicale et biochimique, comprenant

- la génération d'un système de références en utilisant des valeurs mesurées de référence d'objets-référence, dont l'affectation à une catégorie est connue, les valeurs mesurées de référence présentant une répartition sur l'axe continue, comprenant

- la formation de caractéristiques de référence présentant un potentiel de classification élevé, sur la base des valeurs mesurées de référence de tous les objets-référence par regroupement de valeurs mesurées de référence voisines à potentiel de classification élevé, et
- quantification du potentiel de classification des caractéristiques de référence et classement des caractéristiques de référence dans la chronologie de leur potentiel de classification, commençant par la caractéristique de référence ayant le potentiel de classification le plus élevé;

- classification des valeurs mesurées en utilisant des caractéristiques du système de référence

**2.** Procédé selon la revendication 1, comprenant

- la génération d'un système de références en utilisant des valeurs mesurées de référence dont on sait si on est en présence d'une maladie, "catégorie malade", ou non, "catégorie saine", comprenant les opérations

a) détermination du potentiel de classification des valeurs mesurées de référence de tous les objets-référence;
b) formation de caractéristiques de référence;
c) classement des caractéristiques de référence dans la chronologie de leur potentiel de classification;
d) détermination de valeurs d'appartenance pour chaque objet-référence pour l'appartenance à la "catégorie saine" ou à la "catégorie malade", commençant par la caractéristique de référence ayant le potentiel de classification le plus élevé;
e) détermination de la qualité de la classification par re-classification des objets-référence et
f) répétition des opérations (d) et (e) en intégrant à l'opération (d) la caractéristique de référence suivante directement conformément à la chronologie indiquée à l'opération (c) tant que la qualité de la classification s'améliore conformément à l'opération (e);

- classification d'un objet inconnu en utilisant le système de référence, comprenant les opérations

(g) formation de caractéristiques en regroupant les valeurs mesurées de l'objet comme à l'opération (b), le nombre et le choix des caractéristiques correspondant au nombre et au choix des caractéristiques de référence formées conformément à l'opération (f);
(h) détermination de valeurs d'appartenance pour ces valeurs mesurées et
(i) constater si les valeurs d'appartenance déterminées à l'opération (h) apportent la preuve de l'appartenance à la "catégorie malade".

**3.** Procédé selon la revendication 2 **caractérisée en ce que** l'opération (i) comprend la détermination de la sécurité de décision.

**4.** Procédé selon l'une des revendications précédentes **caractérisé en ce que** le potentiel de classification est déterminé à l'opération (b) et à l'opération (c) par un test t.

**5.** Procédé selon l'une des revendications précédentes **caractérisé en ce que** la détermination des valeurs d'appartenance à l'opération (d) a recours à un algorithme qui quantifie la ressemblance de chaque objet-référence à la "catégorie saine" ou à la '"catégorie malade".

**6.** Procédé selon l'une des revendications précédentes **caractérisé en ce qu'**en plus, il comprend

  - le choix d'au moins deux agents indicateurs qui sont utilisés pour le diagnostic de la maladie et obtenus pour les valeurs mesurées et
  - la mise à disposition d'un ensemble jeu de données de valeurs mesurées comprenant respectivement un certain nombre de valeurs mesurées pour chaque agent indicateur.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Classification of 1H MR Spectra of Biopsies from Untreated and Recurrent Ovarian Cancer Using Linear Discriminant Analysis. **Wallace J C et al.** Magnetic Resonance in Medicine. Academic Press, 1997, vol. 38, 569-576

- Feature Selection Toolbox Software Package. **Pudil P et al.** Pattern Reco-Guition Letters. North-Holland Publ, Februar 2002, vol. 23, 487-492
- **Bocklisch, S.F.** Prozeßanalyse mit unscharfen Verfahren. Verlag Technik, 1987
- **Bronstein, I.N. ; Semendjajew, K.A.** Taschenbuch der Mathematik. Verlag Nauka, 1989